Europäisches Patentamt

European Patent Office

Office européen des brevets

(19)

(11) Numéro de publication : **0 446 080 B1**

(12) **FASCICULE DE BREVET EUROPEEN**

(45) Date de publication du fascicule du brevet :
30.11.94 Bulletin 94/48

(51) Int. Cl.⁵ : **H01J 49/04**

(21) Numéro de dépôt : **91400001.3**

(22) Date de dépôt : **02.01.91**

(54) **Procédé et dispositif d'analyse élémentaire d'un échantillon par spectrométrie de masse couplée à un plasma induit par haute fréquence.**

(30) Priorité : **05.01.90 FR 9000065**

(43) Date de publication de la demande :
**11.09.91 Bulletin 91/37**

(45) Mention de la délivrance du brevet :
**30.11.94 Bulletin 94/48**

(84) Etats contractants désignés :
**DE FR GB IT**

(56) Documents cités :
**WO-A-89/12313**
**DE-A- 3 905 303**
**ANALYTICAL CHEMISTRY vol. 57, no. 11, novembre 1985, pages 2674-2679, Washington, US; J.A. OLIVARES et al.: "Ion Sampling for Inductively Coupled Plasma Mass Spectrometry"**
**ANALYTICAL CHEMISTRY vol. 58, no. 1, janvier 1986, pages 97A-105A, Washington, DC, US; R.S. HOUK: "Mass Spectrometry of Inductively Coupled Plasmas"**
**ANALYTICAL CHEMISTRY vol. 52, no. 14, décembre 1980, pages 2283-2289, Washington, US; R.S. HOUK et al.: "Inductively Coupled Argon Plasma as an Ion Source for Mass Spectrometric Determination of Trace Elements"**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**
(84) **DE FR GB IT**
Titulaire : **V.G. ELEMENTAL LIMITED**
**Ion Path, Road Three**
**Winsford, Cheshire CW7 3BX (GB)**
(84) **DE FR GB**

(72) Inventeur : **Bridenne, Martine**
**12 rue Henri Dunant**
**F-91300 Massy (FR)**
Inventeur : **Coffre, Eric**
**6, rue Carnot**
**F-78190 Trappes (FR)**
Inventeur : **Hutton, Robert**
**5 Seant and Albans Drive**
**Nantwich, Cheshire CW7 3BX (GB)**
Inventeur : **Marot, Yves, 23, rue Champ Lagarde**
**11 Résidence des Pépinières**
**F-78000 Versailles (FR)**

(74) Mandataire : **Vesin, Jacques et al**
**L'Air Liquide**
**Service Propriété Industrielle,**
**75, quai d'Orsay**
**F-75007 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un perfectionnement au procédé connu d'analyse d'un échantillon de gaz par un plasma induit par haute fréquence, formant une source d'ions prélevés dans un spectromètre de masse et concerne également une amélioration apportée à l'installation nécessaire à la mise en oeuvre de ce procédé.

On sait que l'analyse élémentaire de certains échantillons, en particulier de composants gazeux ou en solution, est de plus en en plus souvent rendue nécessaire avec des moyens très précis, afin de contrôler de manière extrêmement approfondie la pureté de ces composants. Plus particulièrement mais de façon non exclusive, on sait que dans certaines applications de l'électronique, notamment pour la fabrication de produits semi-conducteurs à très haute intégration, il est indispensable de réaliser des dépôts de silicium extrêmement purs et dont la composition doit rester rigoureusement constante dans le temps. Généralement, on obtient de tels dépôts à partir d'un composé de silicium, notamment de silane, de formule $SiH_4$, évaporé et déposé sous vide sur un substrat. Or, la qualité du dépôt réalisé peut être gravement altérée par la présence dans le silane d'éléments chimiques tels que le lithium Li, le sodium Na, le fer Fe, le calcium Ca, l'arsenic As, le bore B, etc..., qui modifient les propriétés semi-conductrices du dépôt de silicium, parfois de façon considérable, même avec des concentrations relativement très faibles. On conçoit donc l'intérêt de pouvoir, à tout moment, faire une analyse élémentaire très poussée du gaz ou de la solution utilisés.

Dans ce but, il est classique d'utiliser pour effectuer une telle mesure, un spectromètre de masse couplé à un plasma induit par haute fréquence, ce système étant connu dans la technique sous le terme de ICP/MS, intiales de l'expression en langue anglaise "Inductively Coupled Plasma Mass Spectrometer". Le processus consiste en particulier, à partir d'une torche formée d'un tube de quartz recevant un échantillon à analyser du gaz ou de la solution préalablement nébulisée et un milieu plasmagène délivré en couronne autour de l'injection centrale de l'échantillon dans l'axe de la torche, à établir le plasma au moyen d'un dispositif d'induction à haute fréquence coaxial à la torche, en permettant à la sortie de celle-ci d'exciter le mélange gazeux et de recueillir un débit d'ions, qui est alors délivré à un dispositif d'échantillonnage, lui-même en relation avec un spectromètre de masse. De façon connue, ce dispositif comporte deux cônes successifs, généralement en nickel, ces cônes disposés l'un derrière l'autre selon l'axe de la torche, étant munis chacun d'un orifice axial pour recueillir une fraction du débit d'ions à analyser. Le premier cône, plus ouvert, est appelé cône d'échantillonnage et est solidarisé d'un organe de support, généralement refroidi par une circulation continue d'un milieu réfrigérant approprié, le second cône, situé en aval du premier, étant désigné sous le terme de cône de prélèvement. Entre les deux cônes, une fraction majoritaire du débit gazeux est évacuée par une pompe ou analogue tandis que le reliquat, après avoir traversé le second cône, est admis dans une chambre placée sous un vide poussé, de dimensions suffisantes pour permettre le libre passage des ions qui sont ensuite collectés par le spectromètre de masse où ils sont détectés en fonction du rapport de leur masse vis-à-vis de leur charge. Une telle installation, bien connue des spécialistes du domaine, est notamment décrite dans la revue "Analytical Chemistry, Vol. 58 N° 1, Janvier 1986 Pages 97 et seq".

Or l'expérience montre que, avec des échantillons contenant des concentrations élevées en ions du corps à analyser, tel que le silane $SiH_4$, le transfert efficace et régulier des ions jusqu'au spectromètre de masse à travers les deux cônes d'interface, se heurte à certaines difficultés en raison du fait que dans le plasma les atomes (par exemple Si) ou les ions (par exemple Si+), créent rapidement un dépôt de silicium sur la surface externe des cônes eux-mêmes, obstruant partiellement leurs orifices de passage axiaux et perturbant dès lors très sensiblement l'analyse effectuée par le spectromètre de masse.

En effet, dans le plasma créé, consécutivement à la désolvatation de la solution dans le cas d'un échantillon liquide, dans tous les cas de l'atomisation de la molécule et de l'excitation des atomes, que l'échantillon soit liquide ou gazeux, les ions et les atomes sont nécessairement en phase gazeuse du fait de la température du plasma (généralement supérieure ou égale à 5000°K), largement plus élevée à celle de l'ébullition du corps, par exemple égale, dans le cas du silicium, à 2628°K. En revanche, du fait du refroidissement des cônes de nickel, le silicium se solidifie partiellement au contact de ces derniers, en créant ainsi un dépôt préjudiciable.

La présente invention a pour objet un perfectionnement apporté au procédé d'analyse élémentaire d'un échantillon par spectrométrie de masse, couplé à un plasma induit par haute fréquence, qui pallie l'inconvénient précité, en limitant le bouchage des orifices de traversée des cônes de l'installation et une diminution du signal fourni par le spectromètre de masse, diminution de signal qui pourrait être éventuellement légèrement compensée par un changement des réglages de l'optique ionique, qui ne peuvent toutefois être modifiés au cours d'une analyse.

A cet effet, le procédé d'analyse élémentaire d'un échantillon par spectrométrie de masse couplée à un plasma induit par haute fréquence selon le préambule de la revendication 1 se caractérise en ce qu' est ajouté à l'échantillon injecté dans le plasma une quantité donnée d'un gaz d'appoint, à haut pouvoir calorifique, de manière à élever la température du plasma pour chauffer localement les cônes de prélèvement afin d'éviter le dépôt sur ceux-ci des composants de l'échantillon, présents dans le plasma.

On a constaté en effet que la température du plasma formé, qui dépend de sa densité électronique et de sa composition, peut être sensiblement augmentée par introduction dans le milieu plasmagène et/ou l'échantillon injecté dans le plasma, d'un apport complémentaire d'un gaz à haut pouvoir calorifique, procurant notamment une amélioration des transferts d'énergie entre le plasma et les composants de l'échantillon. Ainsi, avec un milieu plasmagène formé notamment d'argon, la température d'excitation du plasma peut ainsi être portée de 5000 à 7000°K, simplement par addition d'un débit approprié d'hydrogène.

Par ailleurs et selon une autre caractéristique de l'invention, on combine l'effet de l'accroissement des températures du plasma à celui qui résulte d'un choix approprié du matériau de cônes réalisant le prélèvement et l'admission d'une fraction de l'échantillon vers le spectromètre de masse. Une installation de prélèvement d'échantillon pour la mise en oeuvre du procédé selon l'invention est caractérisée en ce que les cônes de prélèvement sont réalisés en un matériau présentant des propriétés réfractaires à haute température et une bonne faculté d'usinage.

Avantageusement et dans un mode de réalisation particulier de l'invention, les cônes sont réalisés en un alliage de niobium Nb, hafnium Hf, titane Ti, les proportions relatives de ces trois éléments métalliques étant voisines respectivement de 89 % (Nb), 10 % (Hf) et 1 % (Ti).

D'autres caractéristiques d'une installation de spectrométrie de masse couplée à un plasma induit par haute fréquence (ICP/MS), perfectionnée conformément à l'invention, apparaîtront encore à travers la description qui suit d'un exemple de réalisation, donné ci-après à titre indicatif et non limitatif, en référence aux dessins sur lesquels :

- La Figure 1 est une vue schématique en coupe tranversale de l'installation considérée,

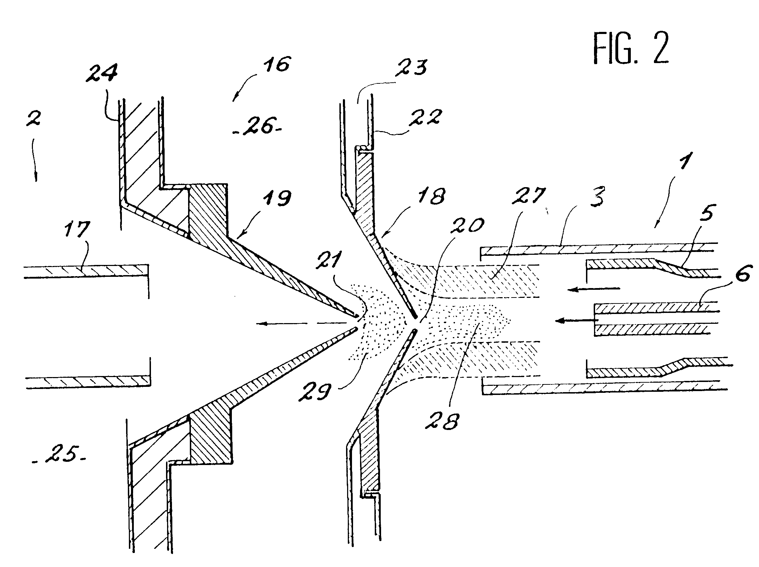

- La Figure 2 est une vue de détail à plus grande échelle d'une partie de l'installation, illustrant plus particulièrement la structure des cônes de cette dernière.

L'installation représentée sur les figures reprend des dispositions connues dans la technique dans les installations classiques du type ICP/MS, comportant notamment une torche d'injection 1, placée en regard d'une structure de liaison 2 avec un spectromètre de masse, non figuré sur le dessin. La torche 1 comporte principalement un tube de quartz 3, associé dans sa surface extérieure à une bobine d'induction 4 à haute fréquence, permettant la création d'un plasma couplé inductivement avec un milieu gazeux injecté dans la torche avec un débit approprié. Avantageusement, la torche 1 comporte des moyens d'admission, de l'échantillon et du milieu plasmagène, constitués d'une tubulure 5, disposée concentriquement dans le tube 3 et comportant elle-même axialement une conduite d'admission 6. Le milieu plasmagène, généralement de l'argon, est introduit par une liaison 7, entre la tubulure 5 et la surface interne du tube de quartz 3, une autre liaison 8 permettant également d'introduire, à l'intérieur de la tubulure 5, un débit auxiliaire d'un autre gaz ou du même gaz que celui qui constitue le milieu plasmagène, afin d'ajuster les conditions de formation du plasma dans la torche, au droit de la bobine d'induction 4. La conduite axiale 6 est raccordée à un ensemble 9 d'introduction de l'échantillon dans l'installation, comportant deux lignes parallèles, respectivement 10 et 11, réunies ensemble à une ligne de liaison unique 6' avec la conduite 6.

L'échantillon gazeux à analyser est délivré par la ligne 10 à travers une vanne 12 munie d'un dispositif de servo-commande et de régulation du débit 13. Cet échantillon peut être de nature quelconque et être, en outre, sous forme gazeuse ou sous forme de solution liquide, celle-ci étant préalablement nébulisée pour constituer un brouillard de très fines gouttelettes. En outre et conformément à l'invention, on introduit par la seconde ligne 11, munie également d'une vanne 14 et d'une servo-commande 15, un débit auxiliaire d'un gaz à haut pouvoir calorifique, de préférence de l'hydrogène, qui se mélange ainsi à l'échantillon dans la ligne de liaison 6' avant d'être injecté dans la conduite 6 dans l'axe de la torche 1.

L'échantillon de gaz intimement mélangé à l'appoint d'hydrogène ainsi fourni, est injecté dans le plasma, dont une partie de ce dernier est prélevée pour être envoyée dans la structure de liaison 2 avec le spectromètre de masse, réalisant l'analyse élémentaire quantitative souhaitée des composants de l'échantillon.

A cet effet, le prélèvement de la fraction nécessaire de l'échantillon est effectué à travers une interface 16, disposée à la sortie de la torche 1 et avant les premières électrodes 17 de l'optique électronique, permettant d'acheminer ce prélèvement jusqu'au spectromètre. De façon classique, l'interface 16 comporte deux cônes successifs, respectivement 18 et 19, placés coaxialement l'un derrière l'autre, le premier cône 18 étant appelé cône d'échantillonnage, tandis que le second est désigné sous le terme de cône de prélèvement. Les cônes 18 et 19 comportent chacun un orifice central, respectivement 20 et 21, le cône d'échantillonnage 18 présentant une ouverture au sommet plus importante que le cône de prélèvement 19. Le cône 18 est solidarisé d'une jaquette de support 22, évidée intérieurement en 23 pour permettre la circulation d'un fluide de refroidissement du cône, généralement de l'eau. Le cône 19 est porté par une structure de montage 24 qui ferme un chambre 25 dans laquelle les ions prélevés à travers les orifices 20 et 21, sont repris par les électrodes 17 qui les accélèrent vers le spectromètre. La chambre 25 est placée sous un vide élevé. Enfin, entre la jaquette de support 22 du premier cône 18 et la structure de montage 24 du second cône 19 est ménagé un espace 26, également placé sous vide mais moins élevé que celui qui règne dans la chambre 25, cet espace 26 étant réuni à une installation de pompage (non représentée). Le jet de plasma 27 sortant ainsi de la torche 1 entoure une zone axiale 28, où l'échantillon gazeux provenant de la conduite 6 est fortement ionisé ; une large fraction de l'échantillon est éliminée vers l'extérieur en suivant la surface du premier cône 18, tandis que le reliquat pénètre à travers l'orifice 20 dans l'espace 26 où il forme une zone d'expansion 29, la partie centrale de celle-ci entrant dans la chambre 25 à travers l'orifice 21.

Selon l'invention, l'adjonction d'un gaz à haut pouvoir calorifique, en particulier de l'hydrogène, dans l'échantillon gazeux initial, permet d'élever la température du plasma et par suite de chauffer localement les cônes successifs 18 et 19, notamment en évitant que les orifices 20 et 21 ne soient obstrués progressivement par les dépôts des composants de l'échantillon, la température de ces cônes étant, dans tous les cas, sensiblement inférieure à celle qui règne au sein du plasma.

Bien entendu, il convient parallèlement de faire choix pour le matériau des cônes d'un métal ou d'un alliage susceptible à la fois d'être convenablement usiné et de supporter les températures envisagées qui peuvent atteindre 7000°K. Avantageusement, les cônes 18 et 19 sont ainsi réalisés en un alliage niobium (89 %), hafnium (10 %), titane (1 %).

On donne ci-après un exemple de mise en oeuvre pratique du procédé considéré, avec un échantillon de silane dilué à 1 % (0,02 l/mn), en comparant les résultats obtenus avec des cônes en niobium-hafnium-titane (Nb-Hf-Ti) par rapport à des cônes, classiques en nickel, en ayant ajouté au débit d'échantillon un gaz d'appoint ici de l'hydrogène. L'échantillon de silane est pollué par une addition de iodure de méthyle CH3I, avec une concentration infime de 2 ppb/mol. On obtient les résultats suivants, permettant de bien mettre en relief l'effet combiné de l'injection d'hydrogène et de l'emploi de cônes en alliage, permettant une limite de détection plus performante et une plus grande stabilité du signal caractérisant le composant recherché (écart-type relatif plus faible que dans le cas de cônes en nickel). Dans cet exemple, développé sous forme de tableau sont pris en compte les paramètres suivants :

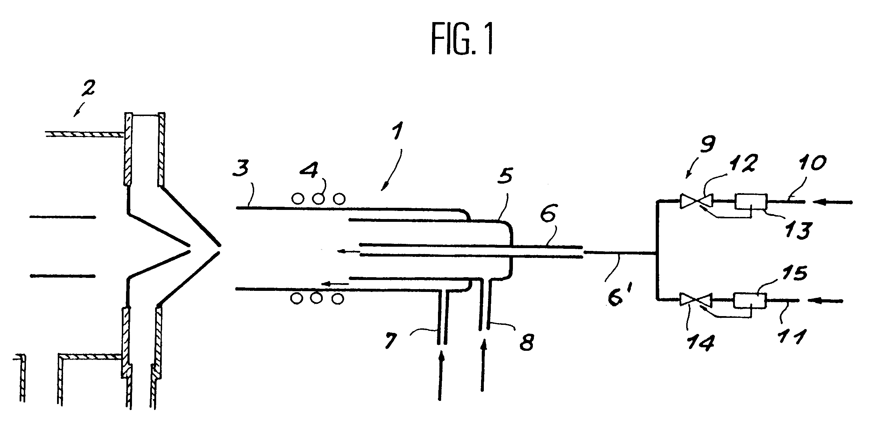

- le débit d'injection est le débit d'argon, permettant d'entraîner l'échantillon à anallyser dans le plasma (en 12 sur la Figure 1). Ce mélange est constitué d'argon, du gaz à analyser et d'hydrogène, lorsque les cônes sont réalisés, selon l'invention en Nb-Hf-Ti.
- l'intensité de $^{127}$I. Les ions du plasma ($Ar^+, Si^+, I^+$), une fois prélevés par les cônes, sont séparés dans le spectromètre de masse en fonction du rapport de la masse sur la charge (m/g), puis grâce à un détecteur placé à la suite de l'appareil, les ions ayant le même rapport m/g sont comptés. La quantité d'ions est ainsi donnée sous forme d'une intensité dont l'unité est l'"ACPS". La mesure de cette intensité met en évidence le bon fonctionnement de l'installation. Plusieurs mesures effectuées successivement permettent de calculer un écart type relatif, de formule

$$\frac{\sqrt{\sum_{i=1}^{m} (X_i - \overline{X})^2 / n-1}}{\overline{X}}$$

où $\overline{X}$ est la moyenne des mesures $X_i$ et n le nombre de ces mesures.

Cet écart type relatif tait apparaître la reproductibilité des mesures et la stabilité du système. On peut remarquer que, avec des cônes en Ni par opposition aux cônes en Nb-Hf-Ti selon l'invention, le système n'est pas stable, l'écart type étant de 29 %. Ceci est notamment dû à la formation d'un dépôt sur les ouvertures des cônes, modifiant le jet des ions à l'entrée du spectromètre de masse. En revanche, dans le cas des cônes en Nb-Hf-Ti, l'écart type relatif est de 1,5 % seulement, démontrant ainsi le gain en stabilité du signal.

Les dépôts formés sur les ouvertures des cônes sont aussi la principale cause de la faible valeur de l'intensité moyenne de l'ion $^{127}$I dans le cas des cônes en Ni. Dans le cas des cônes en alliage selon l'invention, un gain d'un facteur 5 est obtenu par rapport à l'intensité de l'ion $^{127}$I, trouvée avec les cônes en nickel.

La conséquence de ces deux effets (augmentation de l'intensité moyenne et meilleure stabilité du signal) permet ainsi l'obtention d'une meilleure limite de détection et une détection d'une plus faible teneur en impuretés dans le gaz à analyser.

EP 0 446 080 B1

|  | CONES Ni | CONES Nb-Hf-Ti |
|---|---|---|
| Débit injection | 0,7 1/mn | 0,7 1/mn |
| - Débit H2 dilué à 5 % dans de l'argon | 0 | 0,15 1/mn |
| - Débit Ar, SiH4 | 0,7 1/mn | 0,55 1/mn |
| Intensité moyenne de $^{127}I$ | 6 700 ACPS (1) | 32 900 ACPS |
| Ecart type relatif de l'intensité du signal $^{127}I$ | 29 % | 1,5 % |
| Intensité du fond mesurée à la masse $^{125}Te$ | 20 ACPS | 15 ACPS |
| Ecart type du fond par rapport à la masse $^{125}Te$ | 1,75 ACPS | 1,1 ACPS |
| Limite de détection de $^{127}I$ (2) | 5 ppb/a | 0,7 ppb/a |

-------------------------------------------------------------------------

(1) Area Counts Per Second (nombre de comptages par seconde)

(2) Limite de détection suivant la définition de la Norme de l'IUPAC, 1987, égale à $3\,\sigma.c\,/\,I$ où $\sigma$ est l'écart type du fond, c la concentration de l'impureté injectée par rapport à l'échantillon à analyser et I l'intensité moyenne de l'impureté éjectée.

## Revendications

1. Procédé d'analyse élémentaire d'un échantillon par spectrométrie de masse couplée à un plasma induit par haute fréquence, au moyen d'une installation comportant une torche d'élaboration du plasma à partir

5

d'un milieu plasmagène et d'injection dans ce plasma de l'échantillon et une interface de prélèvement dans l'échantillon, comprenant deux cônes successifs disposés sur le même axe mais présentant des angles au sommet différents et munis chacun d'un orifice axial pour le passage d'une fraction de l'échantillon à analyser, caractérisé en ce qu'est ajouté à l'échantillon injecté dans le plasma une quantité donnée d'un gaz d'appoint, à haut pouvoir calorifique, de manière à élever la température du plasma pour chauffer localement les cônes de prélèvement afin d'éviter le dépôt sur ceux-ci des composants de l'échantillon, présents dans le plasma.

2. Procédé selon la revendication 1, caractérisé en ce que le gaz à haut pouvoir calorifique est de l'hydrogène.

3. Procédé selon l'une des revendications 1 ou 2, caractérisé en ce que la température du plasma est portée a environ 7000°K, le milieu plasmagène permettant la formation du plasma étant de l'argon.

4. Installation de prélèvement d'échantillon pour la mise en oeuvre du procédé selon l'une quelconque des revendications 1 à 3, caractérisée en ce que les cônes de prélèvement (18, 19) sont réalisés en un matériau présentant des propriétés réfractaires à haute température et une bonne faculté d'usinage.

5. Installation selon la revendication 4, caractérisée en ce que le matériau des cônes est constitué par un alliage de nobium (Nb), hafnium (Hf), titane (Ti).

6. Installation selon la revendication 5, caractérisée en ce que les composants de l'alliage sont dans les proportions de 89 % de Nb, 10 % de Hf et 1 % de Ti.

**Patentansprüche**

1. Verfahren zur Elementaranalyse eine Probe durch Massenspektrometrie in Verbindung mit einem durch Hochfrequenz induzierten Plasma mittels einer Anlage, die einen Brenner zum Erzeugen eines Plasmas aus einem Plasmaausgangsmedium sowie zum Injizieren der Probe in das Plasma und einen Probenentnahmeanschluß einschließt, der zwei Konen umfaßt, die aufeinanderfolgend auf der selben Achse angeordnet sind, unterschiedliche Kegelwinkel haben und jeweils mit einer axialen Öffnung zum Durchlaß einer Probenfraktion versehen sind, dadurch gekennzeichnet, daß der in das Plasma injizierten Probe eine vorbestimmte Menge eines Hilfsgases hohen Brennwerts derart zugesetzt wird, daß die Plasmatemperatur zur lokalen Erwärmung der Entnahmekonen erhöht wird, um den Niederschlag von im Plasma vorhandenen Probebestandteilen auf den Konen zu verhindern.

2. Verfahren nach Anspruch 1, dadurch gekennzeichnet, daß das Gas hohen Brennwerts Wasserstoff ist.

3. Verfahren nach Anspruch 1 oder 2, dadurch gekennzeichnet, daß die Temperatur des Plasmas auf ungefähr 7000° K gehalten wird, wobei das Ausgangsmedium zur Plasmabildung Argon ist.

4. Probenentnahmeanlage zur Durchführung des Verfahrens nach einem der Ansprüche 1 bis 3, dadurch gekennzeichnet, daß die Entnahmekonen (18, 19) aus einem hoch temperaturbeständigen sowie gut bearbeitbarem Material bestehen.

5. Anlage nach Anspruch 4, dadurch gekennzeichnet, daß das Material der Konen eine Legierung von Niob (Nb), Hafnium (Hf) und Titan (Ti) ist.

6. Anlage nach Ansprsuch 5, dadurch gekennzeichnet, daß die Legierungsbestandteile 89% Nb, 10% Hf und 1% Ti umfassen.

**Claims**

1. Method for the analysis of elements in a sample by mass spectrometry coupled with a plasma induced by high frequency, by means of an installation including a torch for making the plasma from a plasmagenic medium and for injecting some of the sample into this plasma, and an interface for taking off from the sample, comprising two successive cones disposed on the same axis but having different angles at the apex and each provided with an axial orifice for a proportion of the sample to be analysed to pass through, characterised in that a given quantity of a make-up gas with a high calorific value is added to the sample injected into the plasma, so as to raise the temperature of the plasma in order to heat the sampling cones locally in order to prevent components of the sample which are present in the plasma from being deposited on the said cones.

2. Method according to Claim 1, characterised in that the gas with a high calorific value is hydrogen.

3. Method according to one of Claims 1 or 2, characterised in that the temperature of the plasma is increased to approximately 7000° K, the plasmagenic medium enabling the plasma to be formed being argon.

4. Installation for taking off a sample for implementing the method according to any one of Claims 1 to 3, characterised in that the sampling cones (18, 19) are produced from a material with refractory properties at high temperature and good machinability.

5. Installation according to Claim 4, characterised in that the material of the cones consists of an alloy of niobium (Nb), hafnium (Hf) and titanium (Ti).

6. Installation according to Claim 5, characterised in that the components of the alloy are in the proportions of 89% Nb, 10% Hf and 1% Ti.

EP 0 446 080 B1

# FIG. 1

FIG. 2